# EUROPEAN PATENT SPECIFICATION

(11) **EP 2 549 551 B1**
(45) Date of publication and mention of the grant of the patent: **14.05.2014**
(21) Application number: 12177102.6
(22) Date of filing: 19.07.2012
(51) Int. Cl.: H01L 31/042, F24J 2/52, B63B 35/34, B63B 21/50

(54) **Modular supporting construction for photovoltaic systems**
Modularer stützender Aufbau für photovoltaische Anlagen
Construction de support modulaire pour systèmes photovoltaiques

(30) Priority: 20.07.2011 IT MI20111347
(43) Date of publication of application: 23.01.2013
(73) Proprietor: Agora' S.r.l., 29100 Piacenza (IT)
(72) Inventor: Scaciga Della Silva, Diego, I-29100 Piacenza (IT)
(74) Representative: Cicogna, Franco

(56) References cited:
- EP-A1- 2 287 544
- WO-A1-2011/094803
- WO-A2-2007/062278
- WO-A2-2010/064105
- DE-U1-202007 000 702
- JP-A- 2007 173 710
- US-A1- 2006 090 789
- Anonymous: "Petrothene GA 635-662", Equistar Chemicals, LP , 16 August 2002 (2002-08-16), XP002673893, Retrieved from the Internet: URL:http://www.solarplastics.com/solarplas tics/client/materials_pdf/Equistar_LLDPE_G A635662.pdf [retrieved on 2012-04-13]
- Anonymous: "Pontili Galleggianti Modulari", , 15 February 2012 (2012-02-15), XP002684545, Retrieved from the Internet: URL:http://www.pontili-galleggianti.com/pi attaforme_galleggianti_impianti_fotovoltai ci.htm [retrieved on 2012-10-03]
- Anonymous: "top.jpg", , 5 December 2011 (2011-12-05), XP002684546, Retrieved from the Internet: URL:http://www.flotovoltaico.it/images/top .jpg [retrieved on 2012-10-03]
- Anonymous: "Il fotovoltaico galleggiante", , 23 February 2012 (2012-02-23), XP002684547, Retrieved from the Internet: URL:http://www.flotovoltaico.it/ [retrieved on 2012-10-03]

## Description

### BACKGROUND OF THE INVENTION

The present invention relates to a modular supporting structure specifically designed for photovoltaic systems.

As it is known, a photovoltaic system for providing electric power comprises a plurality of photovoltaic panels which are mounted with a given inclination with respect to the ground.

The system power depends on the used panel number, thereby a photovoltaic system occupies a broad area which may not be used for other applications.

Another drawback of prior photovoltaic systems is that the photovoltaic panels, distributed over the ground, are subjected to damages, either intentional or not, and to thefts.

Moreover, the installation of panel support systems in prior photovoltaic arrangements requires a long time, which is also true for the individual panel maintenance and recovering operations.

### SUMMARY OF THE INVENTION

Accordingly, the aim of the present invention is to provide such a photovoltaic system modular supporting structure overcoming the above prior art drawbacks.

Within the scope of the above aim, a main object of the invention is to provide such a modular supporting structure allowing the photovoltaic panels and the overall photovoltaic system to be quickly and easily installed.

Another object of the present invention is to provide such a supporting structure comprising modular elements which may be easily transported and quickly installed.

A further object of the present invention is to provide such a supporting structure allowing the photovoltaic panels to be easily serviced.

A further important object of the present invention is to provide such a supporting structure allowing the photovoltaic panels to be arranged with an optimum arrangement to provide the photovoltaic system with a high efficiency operation.

A further object of the present invention is to provide such a supporting structure which may be easily made starting from easily commercially available elements and materials and which, moreover, is very competitive from a mere economic standpoint.

A further object of the present invention is to provide such a supporting structure which, owing to its specifically designed constructional features, is very reliable and safe in operation.

Document WO 2010/064105 A2 discloses a modular floating construction system for supporting photovoltaic systems including floating blocks on which a supporting structure is fixed. The panels are fixed on the supporting structure.

Document WO 2011/094803 discloses a modular floating construction system for supporting photovoltaic systems including floating blocks on which a supporting structure is fixed. The panels are fixed on the supporting structure. The floating device is preferably formed as a hollow body manufactured by rotationally molding polyethylene and filled with polyurethane.

The floating device and parts thereof can be integrally formed, while support elements are also formed using rotational molding.

According to one aspect of the present invention, the above mentioned aim and objects, as well as further objects, which will become more apparent hereinafter, are achieved by a photovoltaic system modular supporting structure according to claim 1.

The floating module comprises a floating base element and one or more supporting elements for one or more photovoltaic panels.

### BRIEF DESCRIPTION OF THE DRAWINGS

Further characteristics and advantages of the present invention will become more apparent hereinafter from the following detailed disclosure of a preferred, though not exclusive, embodiment of the invention which is illustrated, by way of an indicative but not limitative example, in the accompanying drawings, where:

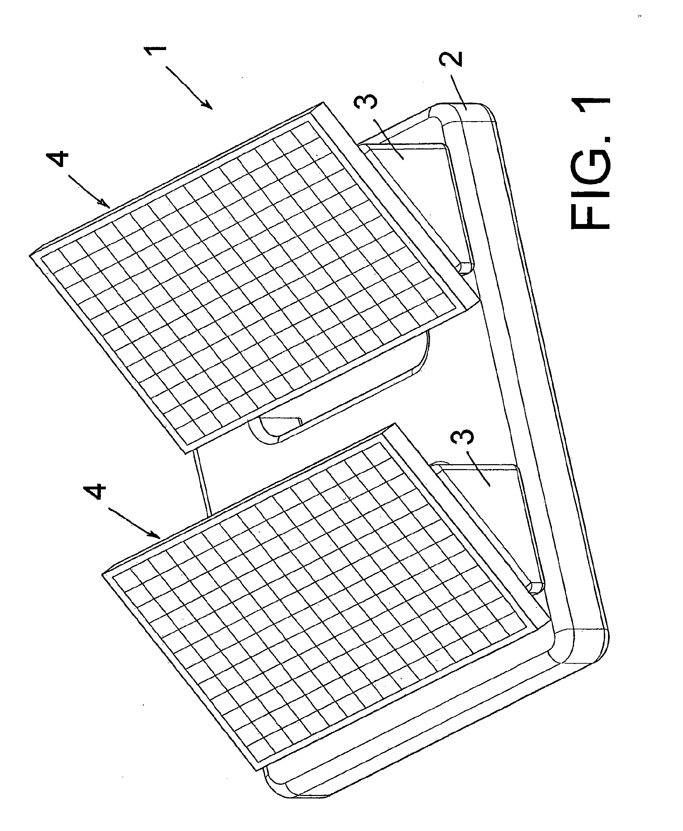

Figure 1 is a perspective view of a floating module of the supporting structure according to the present invention;

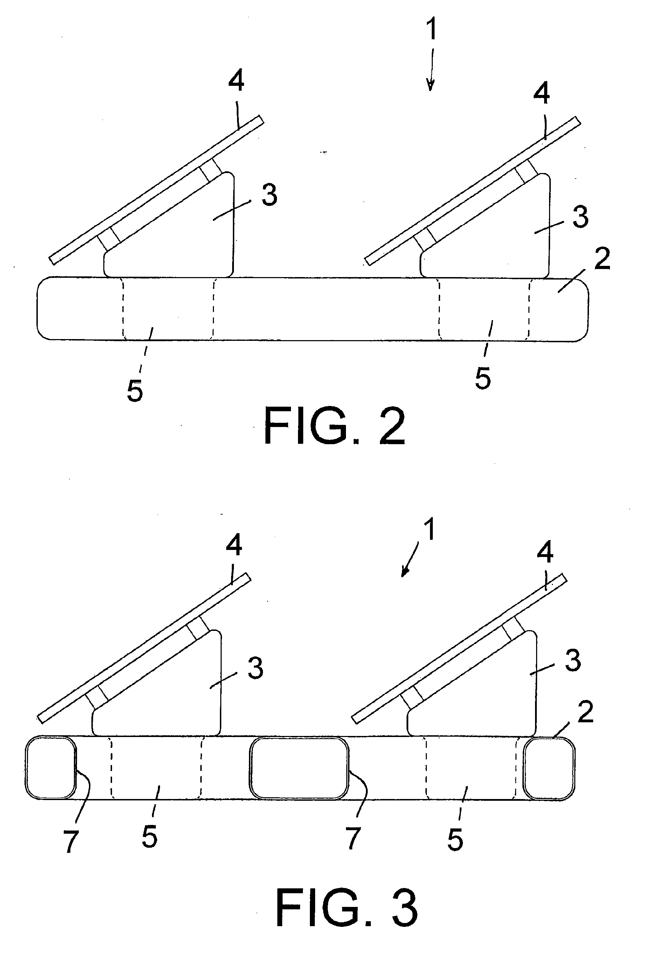

Figure 2 is a side elevation view of the floating module of Figure 1;
Figure 3 is a cross-sectioned side elevation view of the floating module;

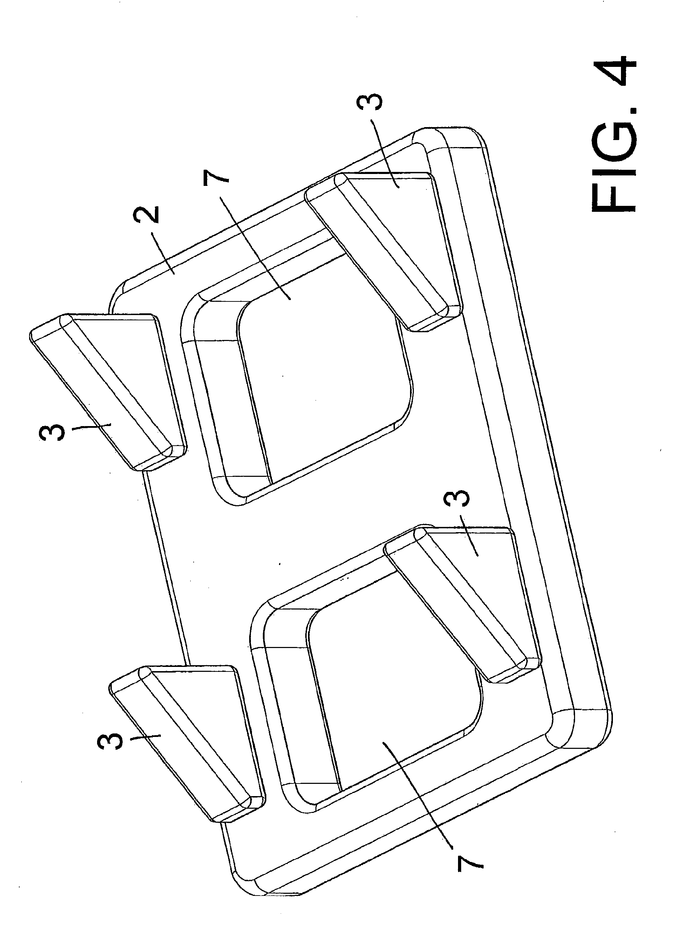

Figure 4 is a perspective view of the floating module being shown without the photovoltaic panels;

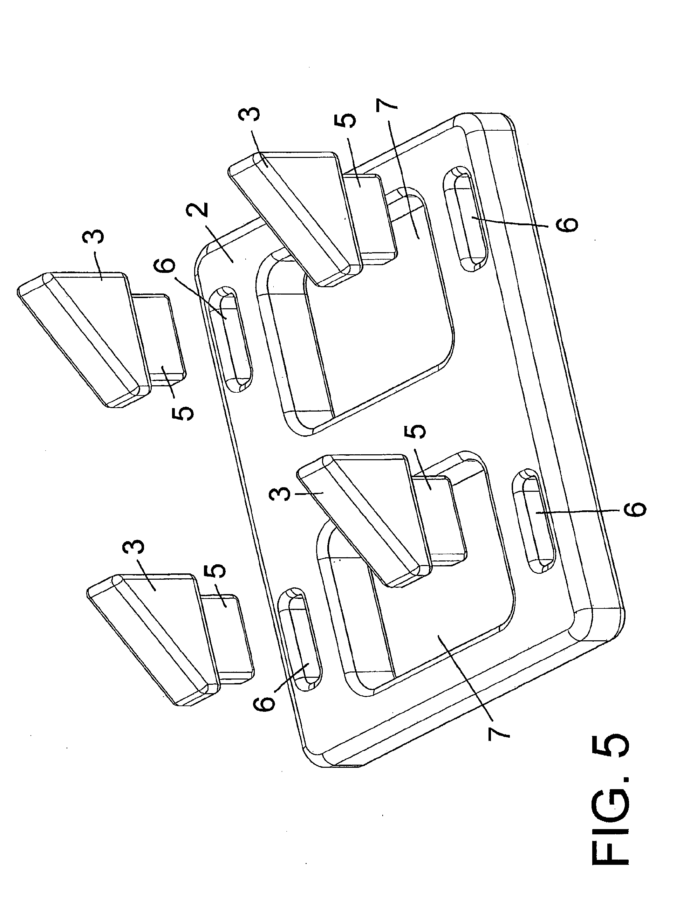

Figure 5 is a further exploded perspective view of the floating module being shown without the photovoltaic panels;

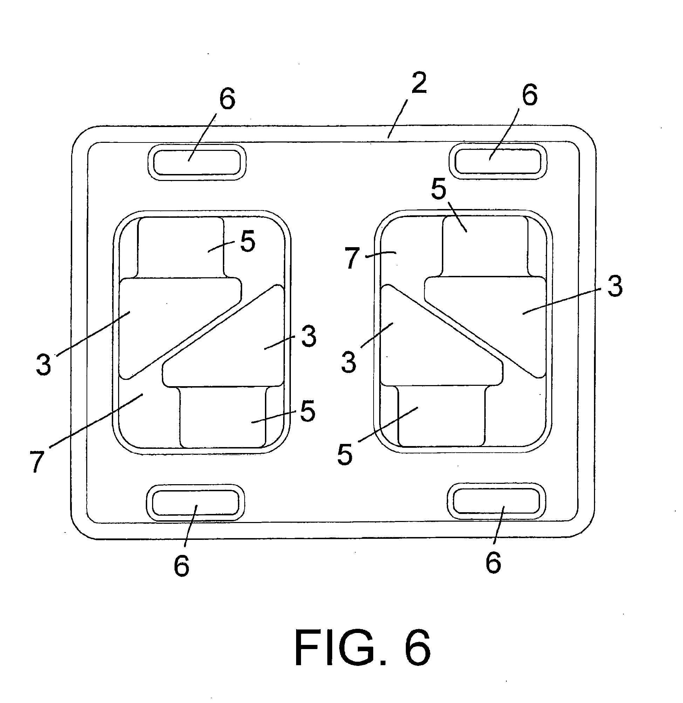

Figure 6 is a top plan view of the floating module being shown in a transporting or storing condition thereof;

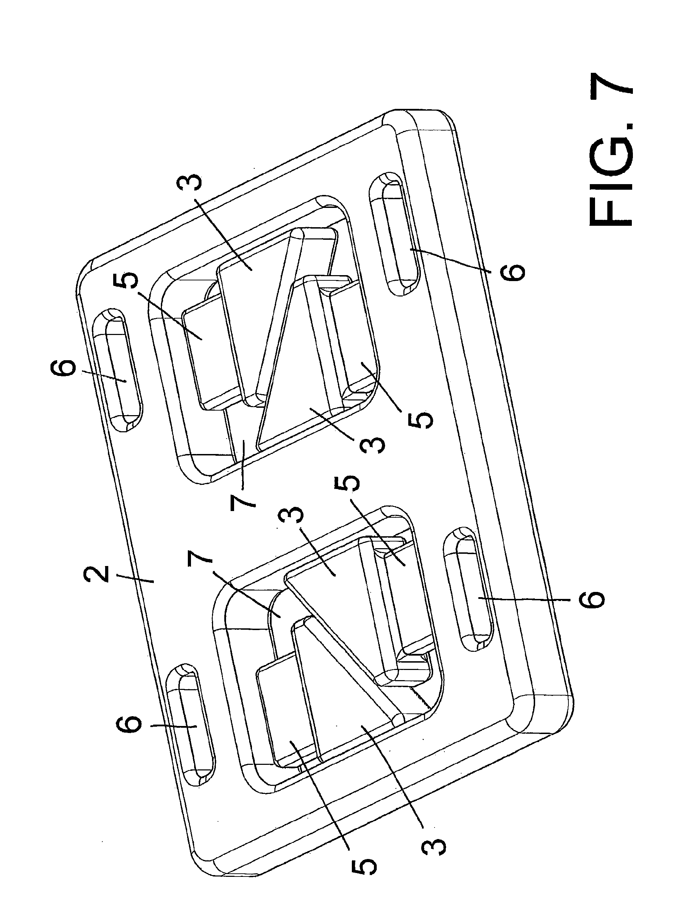

Figure 7 is a perspective view of the floating module being shown in transporting or storing condition thereof;

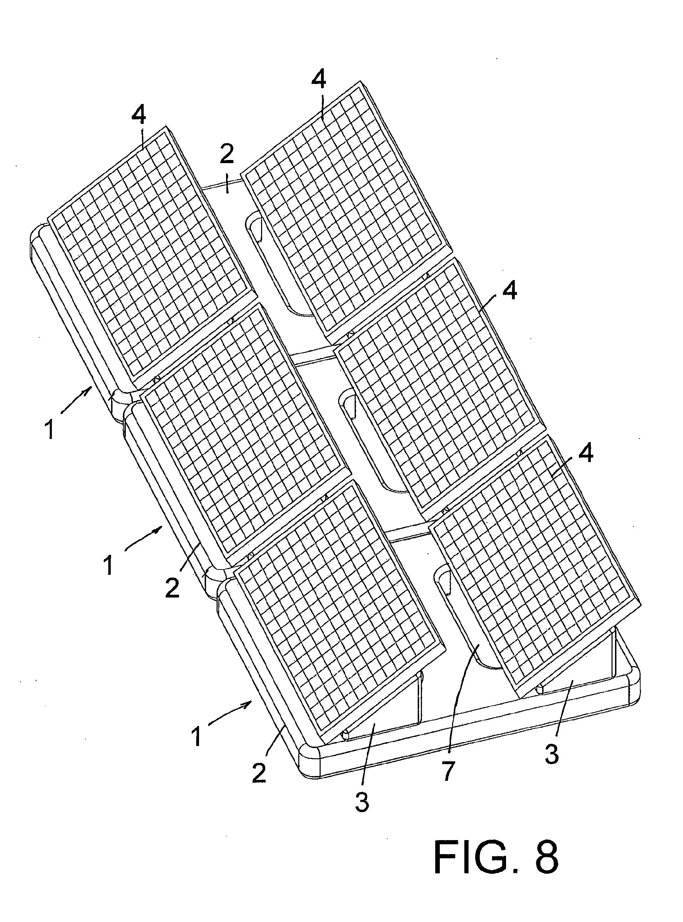

Figure 8 shows a photovoltaic system comprising a plurality of floating modules according to the present invention;
Figure 9 is a perspective view of another embodiment of the floating module of the supporting structure according to the present invention;
Figure 10 is a partially exploded perspective view of a rear side of the floating module of Figure 9;
Figure 11 is another exploded perspective view of a base floating element and support elements of the floating module of Figure 10;
Figure 12 shows a detail of a clamping system for clamping a chain assembly to the floating base;
Figure 13 is a side elevation view of a floating module;
Figure 14 is a schematic view showing a chain connection of the floating modules;
and
Figure 15 is a perspective view showing an arrangement of a photovoltaic system made by the modular structure according to the present invention.

### DESCRIPTION OF THE PREFERRED EMBODIMENTS

With reference to the number references of the above mentioned figures, the modular supporting structure, specifically designed for photovoltaic systems, according to the present invention, comprises a floating support, generally indicated by the reference number 1, constituting an independent module to be associated to other like modules to provide an overall system.

The floating module 1 comprises a base or bottom floating element, or raft 2, and one or more supporting elements or sails 3, for one or more photovoltaic panels 4.

In the exemplary embodiment shown here, the raft 2 supports four sails 3 allowing to install on each module two photovoltaic panels 4, with such an inclination as to optimize the system power efficiency while allowing the rear portion of the panel 4, wherein a photovoltaic control system is installed, to be easily accessed without disassembling the photovoltaic panel 4 from its support 3.

The raft 2 comprises a rotationally molded polyethylene single-block element, the size of which is preferably so selected as to house two standard sized photovoltaic panels.

The preferred material is a superlinear polyethylene material, having an average density of 935 kg/m³, having a very good mechanical strength and resistance against environmental aggressive agents, and a very high flexibility and hardness at low temperatures.

The floating element 2 may be rendered antisinking by filling in it polyurethane resins.

The sail elements 3 also comprise rotationally molded polyethylene single blocks and constitute the supporting elements for the photovoltaic panel 4 and the connection element for connection to the base or bottom raft 2.

The bottom portion of the sail 3 comprises a bottom projection 5 fixedly engaging in the raft 2, thereby the sails 3 are associated with the raft 2 by engaging the bottom projection 5 in an engaging recess 6 formed in the body of the raft 2.

This approach provides, in addition to very high handling, storing and shipment advantages, the further advantage that, if the raft 2 is accidentally broken, then the sails 3 hold the photovoltaic panel 4 in a floating condition, thereby also facilitating the recovery thereof.

In fact, as stated, the sails 3 are advantageously made of the same superlinear polyethylene material as that of the raft 2.

The elements making the floating module 1 have been designed for optimizing the module handling and shipment operations.

In fact, the raft 2 comprises one or more storing recesses 7 adapted to engage one or more sails 3, thereby allowing said sails to be fully arranged within the contour of the raft, without requiring additional arrangement volumes.

The floating module may be assembled in a very easy manner owing to the provision of the raft base seat 6 for each sail.

Thus, this assembling system does not require assembling tools for the installing operation.

In the embodiment shown here, each floating module 1 houses two photovoltaic panels 4, and the connection between the structure of the photovoltaic panel 4 and the polyethylene structure of the floating element 2 is made by a connection system specifically designed to allow the photovoltaic panel to be anchored or clamped to the support sails without the need of performing additional perforations through the body of the floating element 2.

In fact, the installation place assembly provides to use dedicated anchoring systems for the modules 1.

Such anchoring systems are selected depending on the installation place conditions, such as the water depth.

Thus, after having defined the system anchoring fixed points, the single modules 1 are connected to one another by a chain system with the desired distance between the single elements.

The maintenance operations are carried out by suitable servicing means built-in in the system allowing to easily access the single photovoltaic panels.

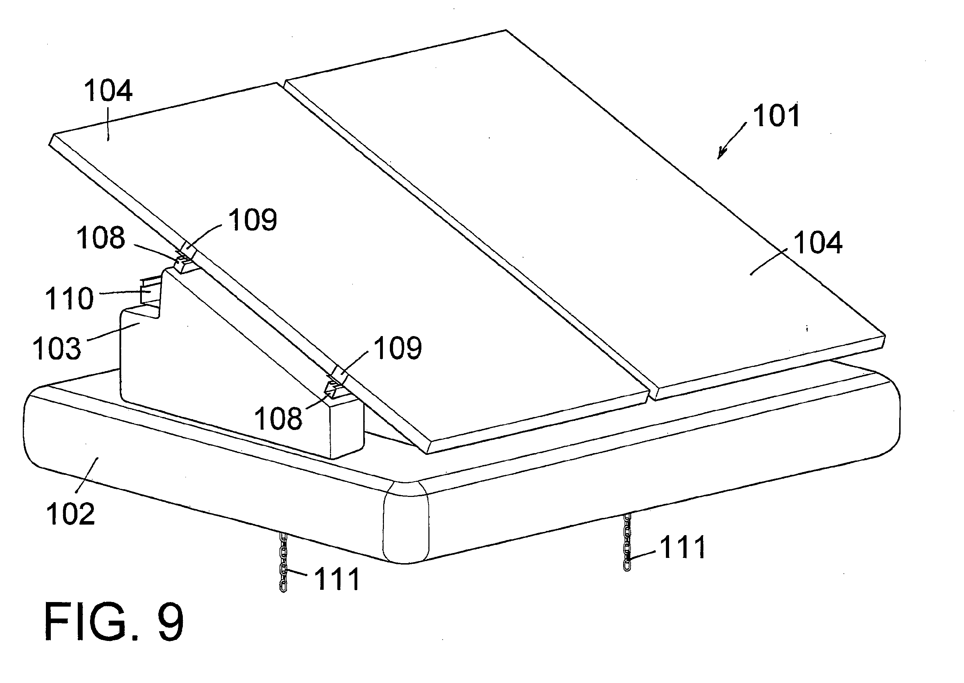

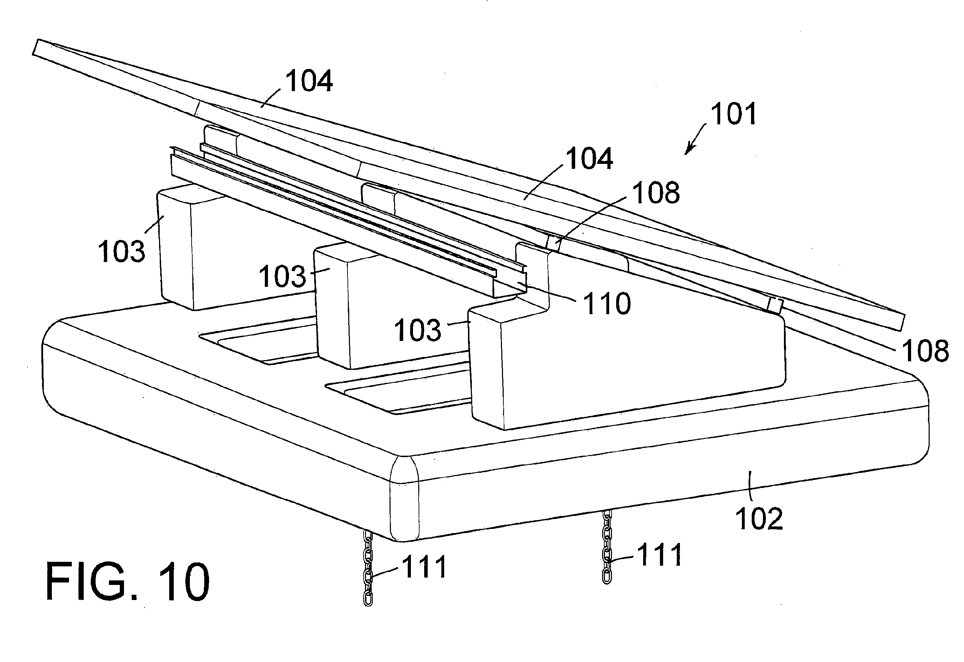

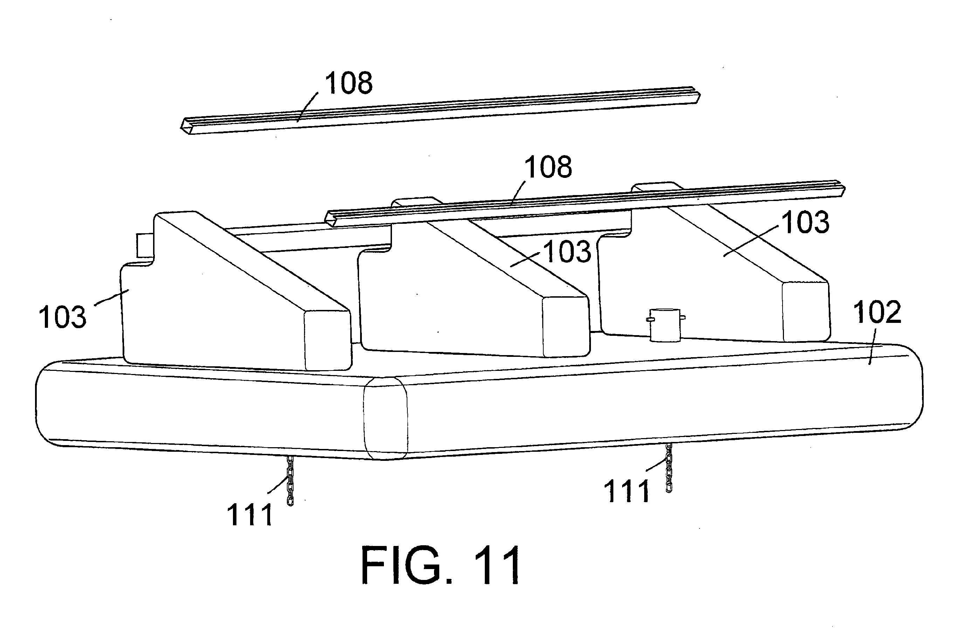

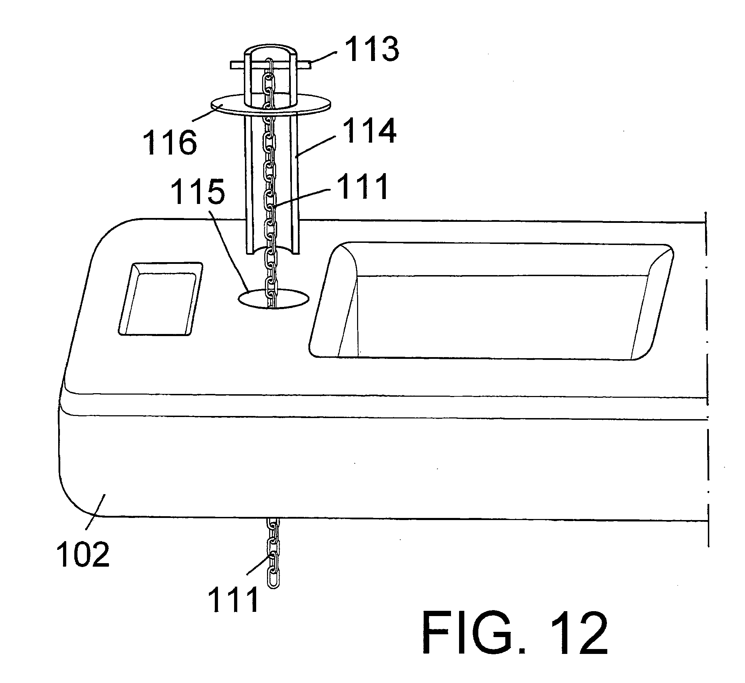

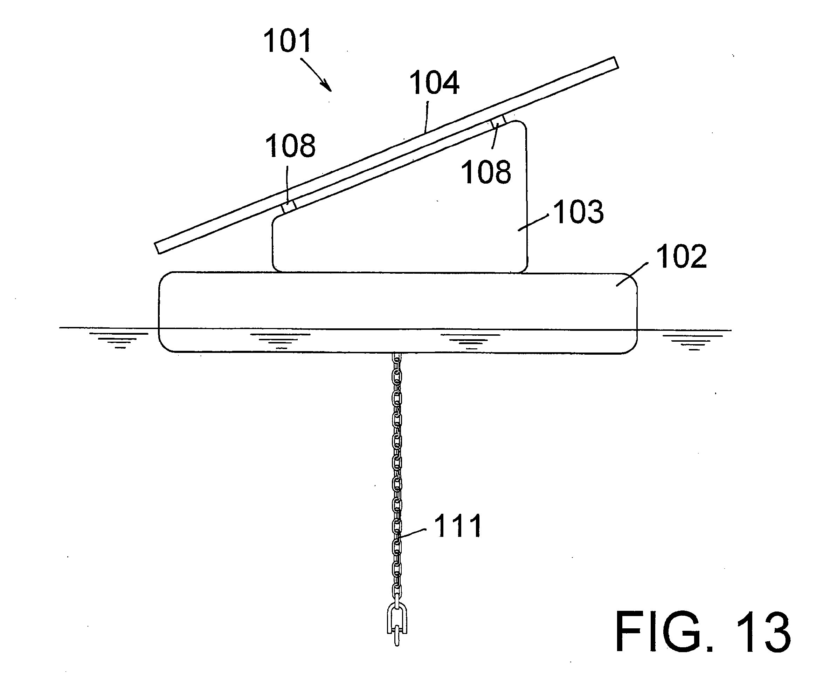

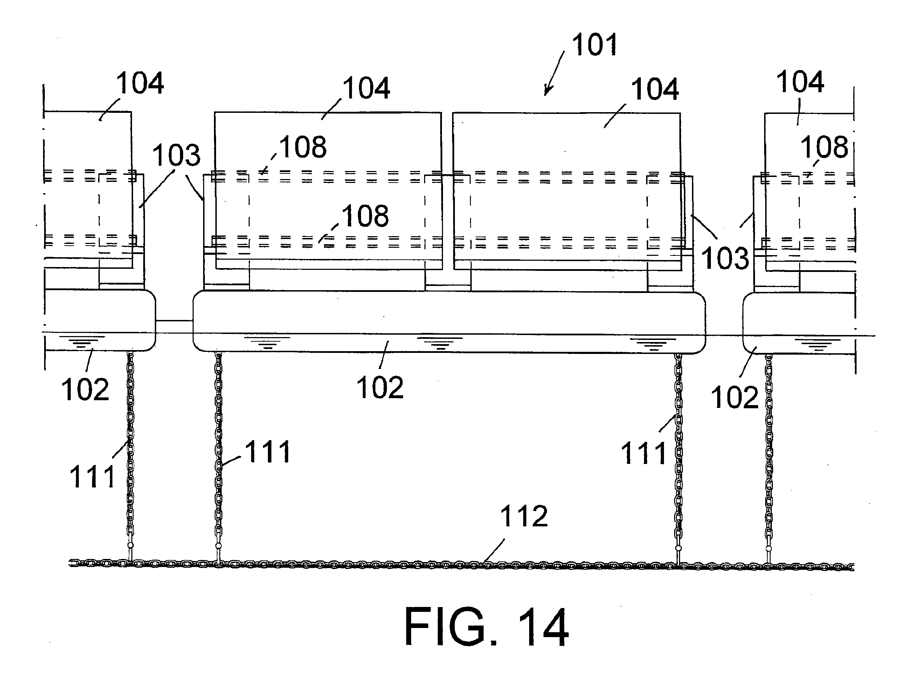

Figures 9-14 show a further embodiment of the subject floating module, indicated by the reference number 101, which comprises a floating base element or raft 102 and one or more support elements or sails 103, for two photovoltaic panels 104.

In this exemplary embodiment, the raft 102 supports three sails 103 allowing to install on each module two photovoltaic panels 104, by cross section members 108, affixed to the sails 103, and side jaws 109, for locking the panels 104 to said section members 108.

The module 101 further comprises a bridge assembly 110, for the electric cables, arranged at the rear of the operating faces of the photovoltaic panels 104.

The system for anchoring the floating base 102 comprises one or more vertically extending chains 111, affixed to each floating base 102 and coupled to a horizontal chain 112.

In particular, the anchoring system comprises a plurality of said horizontal chains 112, which are preferably arranged at about 1 m under the water surface, to provide the floating module with suitable stability and arrangement characteristics.

The mooring system comprises floating buoys for tensioning the chain system to provide an aligned arrangement as the water level changes.

Each vertical chain 111 is clamped to the floating base 102 through a clamping pin 113 affixed to a tube 114 engaged in a throughgoing hole 115 formed in the floating base 102.

A flange 116, rigid with the tube 114, restrains the latter to prevent it from being unthreaded from the hole 115.

The anchoring system allows to exploit at maximum the water reverberation while assuring a proper locating and stabilizing of the floating elements, thereby facilitating the servicing.

An example of an interfacing of the floating modular supporting structure according to the present invention to the electric mains may comprise one or more high efficiency inverters, each of 20 kW, depending on the desired power level, without a dedicated inner transformer.

To each inverter four strings consisting of twenty 250 Watt modules are coupled.

Thus, owing to the provision of a maximum power double follower, each string pair is always held in a maximum efficient operating condition.

All the electric connections are performed according to the enforcing rules and standards, thereby preventing any contacts with water from occurring.

The connection of the system to the electric mains allows to stipulate two GSE conventions.

The first one, for selling to OSE the generated power (dedicated recovery), the second one for the twenty-year collection of the incentives provided by the Energy Account.

Thus, the novel and inventive structure according to the invention provides high economic advantages deriving from the incentive tariffs associated with innovative power installations.

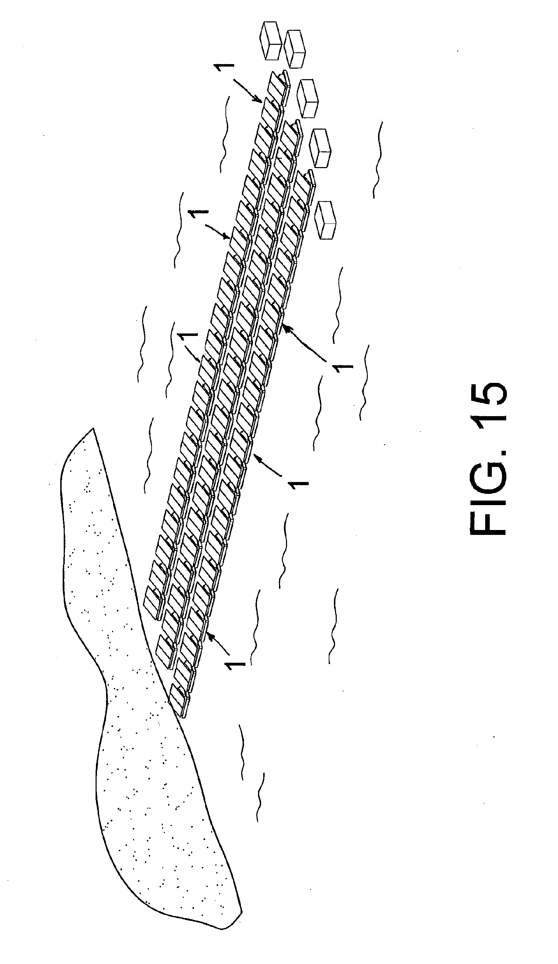

By way of an example, Figure 15 shows a layout of a 60 kWp system covering an area of about 1,200 m² and comprising 120 floating modules arranged in three rows with 240 photovoltaic panels.

To allow an optimum electric power generation, and an easy maintenance in servicing the system, the floating modules are preferably arranged in module rows spaced from one another at about 2.5 meters, thereby allowing a sufficient irradiation and a boat passage for performing servicing or maintenance operations.

The system thus made may be installed in disused quarries, reservoirs and dams, lakes, common waters and protected coastal areas, allowing to produce renewable energy without taking away land suitable for agriculture.

The modular characteristics of the subject floating structure allows to make large size systems, from few kWp to MWp, with high investment profitability values of 15-18% per year.

It has been found that the invention fully achieves the intended aim and objects.

In fact, the invention provides a modular supporting floating structure allowing to easily and quickly install a photovoltaic system on a water surface.

The floating modules have been specifically designed to meet different operating requirements comprising at first the sealing or tightness features of the floating body which, to that end, is made of a rotationally molded polyethylene material, without seams or weldings.

Another very important characteristic of the subject floating module is its easy handling, due to its small weight, since, for example, the overall module has a weight of about 60 Kg.

Moreover, the constructional features of the modules provide them with an optimized size easily meeting even stringent shipment, easy stacking and quick installing arrangement requirements.

Moreover, the modules allow the photovoltaic panels to be easily and quickly serviced, owing to their inclined mounting position.

The support or sail inclination, in particular of about 22°, allows to achieve an optimum operating efficiency of the photovoltaic panel.

The floating element configuration, comprising a base closed element, the raft 2 and four vertical support elements, the sails 3, coupled by fixed joints, provides an overall system comprising five independent chambers which, in case of an accidental failure of the bottom raft body, allow the photovoltaic panels to be always held in a floating condition, thereby facilitating their recovering operations.

Moreover, the reflection of the solar energy irradiated by the water mass, and the related cooling down, increase the photovoltaic panel electric power generation capability by an amount of 20-30% depending on the solar exposition.

In practicing the invention, the used materials, as well as the contingent size and shapes can be any, depending on requirements.

## Claims

1. A photovoltaic system modular supporting structure comprising a floating support (1, 101) constituting an independent module to be associated to other like modules to provide an overall photovoltaic system, said floating module comprising a floating base element (2, 102) and one or more support elements (3, 103) for one or more photovoltaic panels (4, 104), **characterized in that** said floating base element (2) comprises a single-block rotationally molded plastics material element, **in that** said support elements (3) comprise rotationally molded plastics material single-block elements and **in that** each said support element (3) comprises a bottom projection (5) adapted to drill and engage a related recess (7) in the floating base element (2) without using assembling tools.

2. A modular supporting structure, according to claim 1, **characterized in that** said floating base element (2) comprises a single-block rotationally molded element made of a superlinear polyethylene material having an average density of 935 kg/m³.

3. A modular supporting structure, according to claim 1, **characterized in that** said floating base element is filled by polyurethane resins.

4. A modular supporting structure, according to claim 1, **characterized in that** said support elements (3) comprise superlinear polyethylene rotationally molded single-blocks having an average density of 935 kg/m³.

5. A modular supporting structure, according to claim 1, **characterized in that** said support elements (3) are floating elements adapted to hold the photovoltaic panel (4) in a floating condition even if an accidental breakage of the base element (2) occurs.

6. A modular supporting structure, according to claim 1, **characterized in that** said floating base element (2) comprises one or more storing seats (7) for receiving one or more support elements (3), said support elements being restrained in the contour of said base element without occupying a further volume in the structure shipment and storing operations.

7. A modular supporting structure, according to claim 1, **characterized in that** each said module comprises a plurality of independent chambers which, in a case of an accidental breakage of the floating base element, allow the photovoltaic panels to be always held in a floating condition, thereby facilitating the recovering of said panels.

8. A modular supporting structure, according to claim 1, **characterized in that** said module comprises three support elements for two photovoltaic panels, including cross section members (108), affixed to said support elements (103) and side jaws (109), locking said panels (104) to said section members (108).

9. A modular supporting structure, according to claim 8, **characterized in that** said module (101) comprises a bridge assembly for electric cables, said bridge assembly (110) being arranged at a rear position from the photovoltaic panel (104) operating face.

10. A modular supporting structure, according to claim 1, **characterized in that** said structure comprises an anchoring system including one or more vertical chains, clamped to each floating base and connected to a horizontal chain.

11. A modular supporting structure, according to claim 10, **characterized in that** said structure comprises a plurality of horizontal chains (112), arranged at about 1 m under the water surface to provide a stable position for said floating module, with a mooring system including floating buoys for tensioning the chain system (111, 112) to provide alignment as the water level changes.

12. A photovoltaic system for generating electric power, **characterized in that** said photovoltaic system comprises a plurality of modular support structures according to claim 1, each said modular support structure comprising a floating support constituting an independent module to be associated with other like modules to provide an overall system, said floating module comprising a floating base element (2, 102) and one or more support elements (3, 103) for one or more photovoltaic panels (4, 104), said modular structures being arranged in parallel rows spaced from one another to allow a sufficient radiation and a passage of boats therethrough.

## Patentansprüche

1. Modular stützende Struktur für ein photovoltaisches System, die einen schwimmenden Träger (1, 101) umfasst, der ein unabhängiges Modul, das mit anderen ähnlichen Modulen zu verbinden ist, begründet, um ein gesamtes photovoltaisches System bereitzustellen, wobei das schwimmende Modul ein schwimmendes Basiselement (2, 102) und ein oder mehrere Trägerelemente (3, 103) für ein oder mehrere photovoltaische Paneele (4, 104) umfasst,
**dadurch gekennzeichnet, dass** das schwimmende Basiselement (2) einen Einzelblock eines rotationsgegossenen Kunststoffmaterialelements umfasst, dass die Tragelemente (3) rotationsgegossene Kunststoffmaterialelemente aus einem einzelnen Block umfassen und dass jedes Tragelement (3) einen unteren Überstand (5) umfasst, der dafür ausgelegt ist, eine Aussparung (7) in das schwimmende Basiselement (2) zu bohren und einen Eingriff der betreffenden Aussparung in dem schwimmenden Basiselement herzustellen, ohne dabei Montagewerkzeuge zu verwenden.

2. Modular stützende Struktur nach Anspruch 1, **dadurch gekennzeichnet, dass** das schwimmende Basiselement (2) einen Einzelblock eines rotationsgegossenen Elements umfasst, der aus einem superlinearen Polyethylenmaterial mit einer durchschnittlichen Dichte von 935 kg/m³ hergestellt ist.

3. Modular stützende Struktur nach Anspruch 1, **dadurch gekennzeichnet, dass** das schwimmende Basiselement durch Polyurethanharze gefüllt ist.

4. Modular stützende Struktur nach Anspruch 1, **dadurch gekennzeichnet, dass** die Tragelemente (3) rotationsgegossene Einzelblöcke aus superlinearem Polyethylen umfassen, die eine durchschnittliche Dichte von 935 kg/m³ aufweisen.

5. Modular stützende Struktur nach Anspruch 1, **dadurch gekennzeichnet, dass** die Tragelemente (3) schwimmende Elemente sind, die dafür ausgelegt sind, das photovoltaische Paneel (4) in einem schwimmenden Zustand zu halten, selbst dann, wenn ein zufälliger Bruch des Basiselements (2) auftritt.

6. Modular stützende Struktur nach Anspruch 1, **dadurch gekennzeichnet, dass** das schwimmende Basiselement (2) ein oder mehrere Plätze (7) speichert, um ein oder mehrere Tragelemente (3) aufzunehmen, wobei die Tragelemente in der Kontur des Basiselements beschränkt sind, ohne ein weiteres Volumen in der Transportstruktur und in den Speicheroperationen zu besetzen.

7. Modular stützende Struktur nach Anspruch 1, **dadurch gekennzeichnet, dass** jedes Modul mehrere unabhängige Kammern umfasst, die es im Falle eines zufälligen Bruches des schwimmenden Basiselements den photovoltaischen Paneelen ermöglichen, immer in einem schwimmenden Zustand gehalten zu werden, wodurch die Erholung der Paneelen erleichtert wird.

8. Modular stützende Struktur nach Anspruch 1, **dadurch gekennzeichnet, dass** das Modul drei Tragelemente für zwei photovoltaische Paneele umfasst einschließlich der Querschnittselemente (108), die an den Tragelementen (103) befestigt sind, und der seitlichen Klemmbacken (109), die die Paneelen (104) mit den Abschnittselementen (108) verriegeln.

9. Modular stützende Struktur nach Anspruch 8, **dadurch gekennzeichnet, dass** das Modul (101) eine Brückenanordnung für elektrische Kabel umfasst, wobei die Brückenanordnung (110) an einer hinteren Position von der Betriebsfläche des photovoltaischen Paneels (104) angeordnet ist.

10. Modular stützende Struktur nach Anspruch 1, **dadurch gekennzeichnet, dass** die Struktur ein Ankersystem umfasst, das ein oder mehrere vertikale Ketten enthält, die an jeder schwimmenden Basis angeklemmt und mit einer horizontalen Kette verbunden sind.

11. Modular stützende Struktur nach Anspruch 10, **dadurch gekennzeichnet, dass** die Struktur mehrere horizontale Ketten (112) umfasst, die etwa 1 m unter der Wasseroberfläche angeordnet sind, um eine stabile Position für das schwimmende Modul bereitzustellen, mit einem Ankerplatzsystem, das schwimmende Bojen zum Spannen des Kettensystems (111, 112) enthält, um eine Ausrichtung bereitzustellen, wenn sich der Wasserpegel ändert.

12. Photovoltaisches System zur Erzeugung elektrischer Leistung, **dadurch gekennzeichnet, dass** das photovoltaische System mehrere modulare stützende Strukturen nach Anspruch 1 umfasst, wobei jede modulare stützende Struktur einen schwimmenden Träger umfasst, der ein unabhängiges Modul, das mit anderen ähnlichen Modulen zu verbinden ist, begründet, um ein Gesamtsystem bereitzustellen, wobei das schwimmende Modul ein schwimmendes Basiselement (2, 102) und ein oder mehrere Trägerelemente (3, 103) für ein oder mehrere photovoltaische Paneele (4, 104) umfasst, wobei die modularen Strukturen in parallelen Reihen voneinander beabstandet sind, um eine ausreichende Strahlung und einen Durchfahrtsweg von Booten zu ermöglichen.

## Revendications

1. Structure de support modulaire de système photovoltaïque comprenant un support flottant (1, 101) formant un module indépendant à associer à d'autres modules semblables afin de fournir un système photovoltaïque global, ledit module flottant comprenant un élément de base flottant (2, 102) et un ou plusieurs éléments de support (3, 103) pour un ou plusieurs panneaux photovoltaïques (4, 104), **caractérisée en ce que** ledit élément de base flottant (2) comprend un élément en matière plastique moulé par rotation d'un seul bloc, **en ce que** lesdits éléments de support (3) comprennent des éléments d'un seul bloc en matière plastique moulés par rotation et **en ce que** chacun desdits éléments de support (3) comprend une projection du bas (5) adaptée pour forer un creux (7) associé dans l'élément de base flottant (2) et se mettre en prise dans celui-ci sans utiliser des outils d'assemblage.

2. Structure de support modulaire selon la revendication 1, **caractérisée en ce que** ledit élément de base flottant (2) comprend un élément moulé par rotation d'un seul bloc formé par une matière polyéthylène superlinéaire ayant une densité moyenne de 935 kg/m³.

3. Structure de support modulaire selon la revendication 1, **caractérisée en ce que** ledit élément de base flottant est rempli de résines de polyuréthane.

4. Structure de support modulaire selon la revendication 1, **caractérisée en ce que** lesdits éléments de support (3) comprennent des monoblocs moulés par rotation en polyéthylène superlinéaire ayant une densité moyenne de 935 kg/m³.

5. Structure de support modulaire selon la revendication 1, **caractérisée en ce que** lesdits éléments de support (3) sont des éléments flottants adaptés pour maintenir le panneau photovoltaïque (4) dans un étant flottant même si une cassure accidentelle de l'élément de base (2) a lieu.

6. Structure de support modulaire selon la revendication 1, **caractérisée en ce que** ledit élément de base flottant (2) comprend un ou plusieurs sièges de stockage (7) pour recevoir un ou plusieurs éléments de support (3), lesdits éléments de support étant encastrés dans le contour dudit élément de base sans occuper davantage de volume lors des opérations d'expédition et d'entreposage de la structure.

7. Structure de support modulaire selon la revendication 1, **caractérisée en ce que** chacun desdits modules comprend une pluralité de compartiments indépendants lesquels, en cas de cassure accidentelle de l'élément de base flottant, permettent aux panneaux photovoltaïques d'être toujours maintenus dans un état flottant, en facilitant de la sorte la récupération desdits panneaux.

8. Structure de support modulaire selon la revendication 1, **caractérisée en ce que** ledit module comprend trois éléments de support pour deux panneaux photovoltaïques, comprenant des éléments de section transversale (108) fixés sur lesdits éléments de support (103) et des mâchoires de serrage latérales (109) verrouillant lesdits panneaux (104) sur lesdits éléments de section (108).

9. Structure de support modulaire selon la revendication 8, **caractérisée en ce que** ledit module (101) comprend un ensemble de pont pour des câbles électriques, ledit ensemble de pont (110) étant disposé dans une position arrière par rapport à la face de fonctionnement du panneau photovoltaïque (104).

10. Structure de support modulaire selon la revendication 1, **caractérisée en ce que** ladite structure comprend un système d'ancrage comprenant une ou plusieurs chaînes verticales fixées à chaque base flottante et connectées à une chaîne horizontale.

11. Structure de support modulaire selon la revendication 10, **caractérisée en ce que** ladite structure comprend une pluralité de chaînes horizontales (112) disposées à environ 1 m sous la surface de l'eau pour fournir une position stable pour ledit module flottant, avec un système d'amarrage incluant des bouées flottantes pour tendre le système de chaînes (111, 112) afin de fournir un alignement lorsque le niveau d'eau change.

12. Système photovoltaïque pour générer de la puissance électrique, **caractérisé en ce que** ledit système photovoltaïque comprend une pluralité de structures de support modulaires selon la revendication 1, chacune desdites structures de support modulaires comprenant un support flottant formant un module indépendant à associer à d'autres modules semblables afin de fournir un système global, ledit module flottant comprenant un élément de base flottant (2, 102) et un ou plusieurs éléments de support (3, 103) pour un ou plusieurs panneaux photovoltaïques (4, 104), lesdites structures modulaires étant disposées en rangées parallèles espacées les unes des autres afin de permettre un rayonnement suffisant et un passage de bateaux entre elles.
